# FASCICULE DE BREVET EUROPEEN

(11) **EP 1 780 463 B1**
(45) Date de publication et mention de la délivrance du brevet: **03.07.2013**
(21) Numéro de dépôt: 06291649.9
(22) Date de dépôt: 24.10.2006
(51) Int. Cl.: F21V 5/00, B60Q 3/00, G02B 6/00

(54) **Dispositif d'eclairage ou de signalisation à guide optique pour véhicule automobile**
Beleuchtungsvorrichtung mit Lichtleiter für Kraftfahrzeuge
Lighting assembly for vehicles comprising a light guide

(30) Priorité: 27.10.2005 FR 0511018
(43) Date de publication de la demande: 02.05.2007
(73) Titulaire: VALEO VISION, 93012 Bobigny Cedex (FR)
(72) Inventeur: De Lamberterie, Antoine, 75019 Paris (FR); Garcia, Stéphane, 41300 La Ferté Imbault (FR); Bourdin, David, 93190 Livry Gardan (FR); Muller, Julien, 75017 Paris (FR)
(74) Mandataire: Tran, Chi-Hai

(56) Documents cités:
- EP-A- 1 491 815
- EP-A- 1 640 656
- FR-A- 2 856 135
- US-A- 5 668 913
- US-A1- 2003 058 633

## Description

La présente invention a pour objet un dispositif d'éclairage ou de signalisation équipant un véhicule automobile, comportant au moins un guide optique apte à produire une diffusion de la lumière sur au moins une partie de sa longueur. L'invention concerne aussi un véhicule comportant un tel dispositif d'éclairage ou de signalisation.

Dans le domaine de l'éclairage et de la signalisation de véhicules automobiles, il est de plus en plus fréquent d'utiliser des guides optiques. Un guide optique est, très schématiquement, un élément allongé de matière transparente, généralement de section de type cylindrique. A proximité de l'une des extrémités du guide, appelée face d'entrée du guide, est disposée une (ou plusieurs) sources lumineuse, par exemple une source lumineuse de petite taille du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou courbe, et amener une surface éclairante même dans des zones peu accessibles du projecteur ou du feu du véhicule. Il participe ainsi fortement au style du projecteur ou du feu.

Cependant, les guides de lumières existants sont perfectibles. Par exemple, les guides sont généralement conçus pour optimiser l'aspect et les performances optiques du guide à l'état allumé dans l'axe longitudinal du véhicule, que les guides soient destinés à s'intégrer dans un projecteur ou dans un feu. Il s'agit notamment d'avoir la plus grande intensité lumineuse possible, et ceci de façon aussi homogène que possible le long du guide de lumière. Mais optimiser l'homogénéité de l'aspect allumé selon l'axe du véhicule tend à dégrader l'aspect du guide sous d'autres angles de vision. Or, si le guide de lumière est par exemple intégré dans un feu avec un retour d'aile important, il peut s'avérer important que le guide conserve autant que possible un aspect allumé homogène selon des angles de vision notablement différents de l'axe longitudinal du véhicule, qui se confond généralement avec l'axe optique du feu (ou du projecteur de la même manière), comme s'il s'agissait d'une lampe de type néon : On a donc tendance à concevoir le guide de façon à ce qu'il éclaire principalement dans l'axe du véhicule afin de répondre aux normes photométriques, alors qu'il est maintenant aussi demandé que l'aspect allumé du guide soit homogène et agréable visuellement également quand l'observateur s'écarte de l'axe longitudinal du véhicule.

Il est déjà connu, par exemple des documents EP-A-160656 ou EP 1605201 un guide de lumière dont la face arrière dite face de réflexion est munie de prismes.

L'invention a alors pour but l'obtention d'un guide de lumière amélioré, notamment un guide dont l'aspect à l'état allumé est amélioré selon des axes de vision différents de l'axe longitudinal du véhicule ou de l'axe optique du dispositif d'éclairage et/ou de signalisation dans lequel il est intégré.

L'invention a tout d'abord pour objet un dispositif d'éclairage et/ou de signalisation pour véhicule automobile comportant au moins une source lumineuse émettant un faisceau lumineux et au moins un guide optique dans lequel se propage ledit faisceau lumineux, ledit guide optique comportant
- une première face formant une face de sortie du faisceau lumineux, et
- une seconde face, opposée à la face de sortie, formant une face de réflexion du faisceau lumineux.

Cette face de réflexion est munie d'éléments réfléchissants sous forme de pseudo-prismes dont l'une des faces comprend au moins deux pans inclinés successifs ayant des inclinaisons différentes et/ou dont l'une des faces est au moins partiellement courbe.

Les prismes étant, au sens strict du terme dans le domaine de l'optique, des formes géométriques délimitées par des surfaces planes généralement de base triangulaire, le terme de « pseudo-prismes » est à comprendre au sens de l'invention comme une forme géométrique se rapprochant de celle d'un prisme, mais dont une des faces au moins n'est pas stricto sensu constituée d'une surface plane continue.

Il s'est avéré, de manière surprenante, que modifier ainsi la géométrie des prismes permet de conférer au guide l'homogénéité d'aspect quand l'angle de vue du guide s'écarte significativement de l'axe longitudinal du véhicule : même à des angles de vision s'écartant de 60 ou 70° par rapport à l'axe du véhicule, l'invention permet de mieux répartir la lumière émise par le guide, de l'étaler dans une zone de l'espace plus importante.

De préférence, les pseudo-prismes de la face de réflexion sont consécutifs.

On rappelle que les pseudo-prismes, comme les prismes selon l'art antérieur, sont définis par deux facettes. Les deux facettes sont actives optiquement à des degrés divers : L'un des facettes est active optiquement :
les rayons lumineux se propageant dans le guide qui la frappent seront réfléchis puis renvoyés vers la face de sortie du guide avec un angle tel qu'ils sortiront du guide. Cette facette est active au premier ordre, en agissant optiquement par réflexion directe d'une majorité des rayons qui l'atteignent. L'autre facette du pseudo-prisme est plutôt active optiquement au deuxième ordre, en ce sens qu'elle agit par réfraction d'une faible partie des rayons qui l'atteignent.

Avantageusement, les pseudo-prismes, dans leur variante courbe, ont de préférence une facette concave, de préférence leur facette active optiquement par réflexion telle que définie plus haut.

Selon un mode de réalisation, les pseudo-prismes ont leurs deux faces courbes, notamment de courbures inversées concave/convexe, ou de même courbure, notamment concave/concave. On a en effet montré qu'ajouter également une courbure sur la facette optiquement active par réfraction pouvait avoir une incidence favorable : cela permet de mieux contrôler la répartition entre la quantité de lumière atteignant un pseudo-prisme puis sortant du guide et la quantité de lumière atteignant un pseudo-prisme puis poursuivant sa propagation dans le guide.

Selon un autre mode de réalisation, seule une des facettes est courbe ou sous forme d'une succession d'au moins deux pans de droite d'inclinaisons différentes, de préférence la facette active en réflexion.

A titre d'exemple, la face du guide de lumière sur laquelle se trouvent les pseudo prismes peut se trouver selon un plan sensiblement parallèle ou peu incliné par rapport à l'axe d'émission de lumière de la source de lumière alimentant le guide.

Selon un mode de réalisation, les pseudo-prismes ont leur sommet interne arrondi, ce qui présente plusieurs avantages. D'une part, cette forme géométrique est plus facile à obtenir par moulage que des arêtes aigues. D'autre part, ce sommet courbe permet l'obtention d'une meilleure homogénéité, parce qu'une quantité plus importante de lumière continue de se propager dans le guide et parce que la forme courbe de l'arrête autorise l'envoie de rayons au-delà de l'angle de 60°par rapport à l'axe longitudinal du véhicule. On comprend par sommet « interne » au sens de l'invention la zone de jonction entre deux pseudo-prismes contigus, au niveau de la base desdits pseudo-prismes, comme cela sera illustré aux figures.

Alternativement ou cumulativement à ce mode de réalisation, le sommet externe est également choisi de préférence courbe, arrondi, notamment pour faciliter la réalisation du guide. On comprend ici par sommet « externe », par opposition au sommet « interne » précédent, le sommet de chaque pseudo-prisme, qui correspond à la zone de jonction entre les deux facettes d'un même pseudo-prisme, comme également illustré aux figures. En effet, les zones des pseudo prismes qui « travaillent » le plus optiquement correspondent aux sommets des pseudo prismes d'air complémentaires à ces pseudo prismes, c'est-à-dire aux sommets internes, au fond, à la base des pseudo prismes de matière du guide de lumière. On peut donc se permettre de les arrondir, notamment pour en faciliter la réalisation, sans en diminuer significativement leur efficacité optique. Selon un autre mode de réalisation intéressant, les pseudo prismes selon l'invention ont donc un sommet externe courbe/arrondi et un sommet interne qui ne l'est pas.

Avantageusement, le guide de lumière selon l'invention est de type linéaire (courbe ou droit), plutôt que surfacique/en nappe. On comprend par linéaire un guide qui se présente sous forme d'un anneau, d'une tige droite ou courbe (avec généralement une source de lumière à l'une des extrémités du guide), par opposition à un guide surfacique qui se présente sous forme d'une plaque, d'un panneau, qui peut être plan ou courbe, où généralement on utilise plusieurs sources de lumière réparties sur le chant d'un des bords du panneau.

Avantageusement encore, la géométrie des pseudo-prismes évolue le long du guide de lumière. Cette évolution est notamment utile pour limiter au mieux toute inhomogénéité d'aspect du guide à l'état allumé entre la première extrémité munie d'une source lumineuse et la seconde extrémité qui en serait dépourvue : en modulant par exemple la courbure de la facette optiquement active du pseudo-prisme le long du guide, on parvient à moduler l'intensité lumineuse du guide, en rendant la partie du guide proche de la première extrémité moins lumineuse que la partie proche de la seconde extrémité. Ceci permet de compenser la décroissance de la quantité de lumière se propageant dans l'épaisseur du guide tout au long du guide, décroissance due à l'absorption d'une partie des rayons de part la nature du guide, due aussi aux fuites de lumière par la face arrière de réflexion du guide, due enfin à la présence des prismes prélevant une partie de la lumière initialement envoyée dans le guide pour la faire sortir du guide par sa face avant.

Cette évolution de la géométrie des pseudo-prismes peut être réalisée de différentes manières :
- la facette du pseudo-prisme comportant plusieurs pans inclinés et/ou la facette courbe du pseudo-prisme peuvent avoir une flèche qui varie le long du guide, et/ou
- lesdites facettes peuvent avoir un angle de départ par rapport au plan passant par la base des pseudo-primes qui varie de long du guide, et/ou
- lesdites facettes peuvent avoir un angle au sommet qui varie le long du guide...

Selon un mode de réalisation, la face de sortie du guide est munie de stries ou de prismes, de préférence en regard des pseudo-prismes de la face de réflexion dudit guide.

Selon un autre mode de réalisation, la face de sortie FS du guide est lisse et dépourvue de stries ou prismes.

L'invention concerne aussi tout véhicule automobile intégrant un tel guide de lumière.

L'invention sera décrite en détails à l'aide de plusieurs exemples de réalisation non limitatifs et illustrés par les figures suivantes :
La figure 1 représente une vue d'un guide optique selon l'invention destiné à être incorporé dans un feu de véhicule automobile.
La figure 2 représente une section longitudinale d'un guide de lumière selon l'art antérieur.
Les figures 3 à 6 représentent des sections longitudinales du guide de lumière selon plusieurs modes de réalisation de l'invention.

Toutes ces figures sont très schématiques et ne respectent pas nécessairement l'échelle pour en faciliter la lecture.

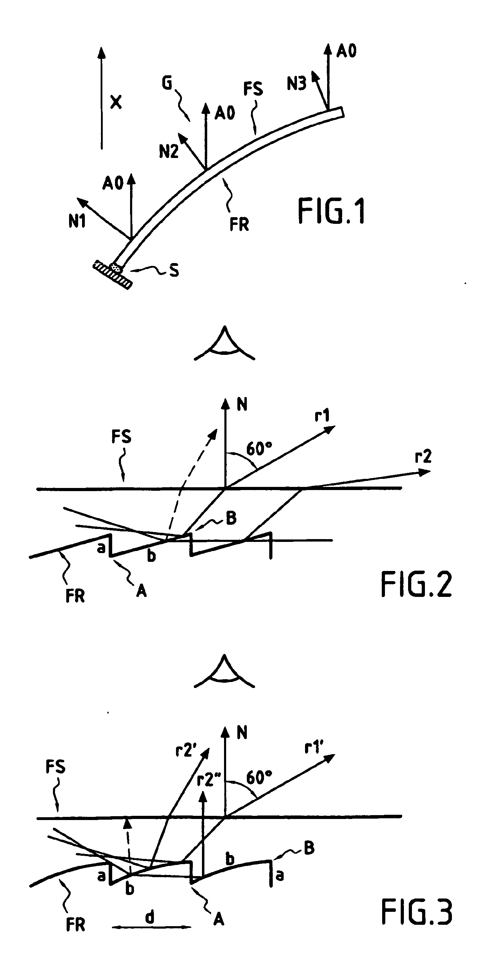

Les figures 1 et 2 montrent une vue en perspective et en coupe d'un guide optique G destiné à propager un faisceau lumineux émis par une source lumineuse S. Le guide optique, dans cet exemple, est galbé. La figure 1 est une vue d'ensemble s'appliquant aussi bien à l'invention qu'à l'art antérieur. La figure 2 concerne un exemple comparatif de l'art antérieur.

Il est bien entendu que le guide optique selon l'invention peut avoir d'autres formes comme, par exemple, comporter des courbures, une ou plusieurs portions d'arc de cercle etc. L'invention s'applique à tout guide courbe ou rectiligne, fermé ou ouvert, mutadis mutandi.

Dans l'exemple suivant selon l'invention, le guide optique G a une section circulaire ; il est bien entendu qu'il peut aussi, dans d'autres modes de réalisation, avoir une section elliptique, carrée, ovale, voire plus complexe, et il est à base de polymère transparent en polycarbonate (ou polymétacrylate de méthyle PMMA, ou autre polymère approprié), de préférence de qualité cristal.

Selon la figure 1, le guide optique G présente une face dite d'entrée à l'une de ses extrémités, au regard de laquelle est disposée une diode électroluminescente S, et une face terminale, qui constitue l'extrémité opposée à la précédente, et qui est dépourvue de source lumineuse. Optionnellement, il est possible de prévoir une seconde source lumineuse à chacune des extrémités du guide. Le guide comporte par ailleurs deux faces principales orientées selon sa longueur :
- une première face FS constituant une face de sortie des rayons lumineux propagés dans le guide optique G ; cette face de sortie FS peut être lisse et continue, ou bien comporter des stries.
- une deuxième face FR, opposée à la première face FS, constituant une face de réflexion du guide optique G, qui est donc munie d'éléments réfléchissants.

La figure 1 représente, selon l'art antérieur, les rayons lumineux AO sortant du guide lumineux selon l'axe X longitudinal du véhicule. Selon l'art antérieur, la conception du guide, et notamment les configurations des prismes sur la face de réflexion FR, sont choisies de façon à ce que la direction privilégiée de la lumière émise par le guide suive l'axe X. On remarque que, quand le guide est fortement galbé (retour d'aile dans un feu de signalisation par exemple), l'angle entre l'axe AO et la normale locale Ni au guide G croit significativement à proximité de la face d'entrée du guide, pour atteindre des valeurs de 60 ou 70°.

La figure 2 de l'exemple comparatif montre le type de prisme de la face de réflexion connu de l'art antérieur : la face FR est munie d'une série de prismes plans consécutifs, chacun des prismes a une base triangulaire et comporte :
- un sommet A, dit sommet « externe » et un sommet B, dit sommet « interne » comme évoqué plus haut,
- une facette plane b agissant optiquement par réflexion, au premier ordre, en ce sens que les rayons lumineux qui la frappent vont être redirigés vers la face de sortie FS du guide où ils vont être réfractés puis sortir du guide,
- une facette plane a agissant optiquement par réfraction, au deuxième ordre, les rayons lumineux susceptibles de l'atteindre étant pour l'essentiel renvoyés dans le guide G et continuent à s'y propager.

Comme mentionné plus haut, la forme des prismes est généralement étudiée pour faire sortir de la lumière du guide selon une direction privilégiée qui est celle de l'axe X longitudinal du véhicule, alors que l'observateur peut être disposé latéralement (observateur symbolisé par un oeil). Les angles des prismes sont donc calculés de telle manière que :
- les rayons peu inclinés par rapport à l'axe médian du guide - localement (qui est parallèle à la surface FS), symbolisés par le rayon r1 sur la figure 2, sont directement réfléchis par réflexion totale sur la facette b du prisme pour repartir dans la direction spécifiée après réfraction par la face de sortie FS du guide,
- les rayons plus inclinés (symbolisés par le rayon r2 sur la figure 2) ne sont pas totalement réfléchis mais sont en revanche réfractés par la facette b avant d'être soit perdus soit réfractés de nouveau par la facette a puis enfin réfléchis totalement par la facette b du prisme suivant avant d'être réfractés par la face de sortie FS vers la direction spécifiée.

On constate que la configuration de prismes comme représentée à la figure 2 conduits à une répartition de lumière essentiellement centrée autour d'un angle de 60°par rapport à la normale au guide N. En effet, la lumière directement réfléchie par les facettes b des prismes pouvant repartir dans des directions proches de la normale N subit des pertes liées aux coefficients de Fresnel (pour donner des ordres de grandeur, Réflexion lumineuse RL entre environ 4 et 10% et Transmission lumineuse TL entre environ 90 à 96% (comme représenté aux figures 2 et 3 sous forme de rayons pointillés). Il en découle que, localement, la partie du guide la plus proche de la source S n'aura pas un aspect allumé pour l'observateur symbolisé par un oeil qui se trouve sur la normale au guide. Par ailleurs, pour que ces rayons soient directement réfléchis vers une direction proche de la normale N, ils doivent former - dans le guide - un angle très important par rapport à l'axe médian du guide; ce qui est peu réaliste.

Comme représenté à la figure 3, qui correspond à une première variante selon l'invention, une façon de remédier à cet inconvénient est de remplacer la facette a et/ou la facette b du prisme, de préférence au moins la facette b pour obtenir l'effet le plus prononcé, par une forme courbe et non plus plane. Dans l'exemple de la figure 3, on a alors des « pseudo-prismes », avec un sommet externe A, un sommet interne B, et une facette a similaires à ceux représentés à la figure 2, mais une facette b qui est concave. Le cheminement des rayons est alors différent :
- les rayons peu inclinés (symbolisés à la figure 3 par le rayon r1') atteignant b en une point ou la pente est identique à celle de l'art antérieur restent réfléchis de la même manière que dans l'exemple comparatif selon la figure 2, ce qui contribue à respecter la spécification initiale, à savoir envoyer une quantité de lumière importante dans une direction privilégiée d'environ 60° à 70° par rapport à la normale au guide,
- les rayons plus inclinés (symbolisés à la figure 3 par le rayon r2') atteignant b en une point ou la pente est plus forte vont être totalement ou partiellement réfléchis vers des directions plus proches de la normale N locale du guide G. Contrairement au cas de l'art antérieur selon la figure 2, il n'est pas nécessaire que ces rayons - dans le guide - forment un angle important par rapport à l'axe médian du guide. D'autre part, les pertes par réflexions seront bien moindre voire nulles dans le cas où la réflexion est totale.

Des rayons encore plus inclinés (symbolisés à la figure 3 par le rayon r2") vont être réfractés par la face b du pseudo-prisme : ils peuvent à nouveau entrer dans le guide par la facette a, et ils sont ensuite réfléchis par réflexion totale sur la facette b du pseudo-prisme suivant dans une zone qui permet de renvoyer la lumière dans une direction normale localement au guide.

La distance d entre deux sommets externes A de deux pseudo-prismes consécutifs est, par exemple, d'environ 1 mm. La hauteur de la facette a est d'environ 0,1 mm à 0.4 mm. L'angle y du sommet A (en prenant la tangente à la facette b en A pour mesurer l'angle) varie typiquement entre 45° et 90° ou entre 45° et 135° par exemple. L'angle x de la tangente de la facette b par rapport à la base du pseudo prisme varie (par exemple) le long du guide entre 5° et 45°.

Dans le cas de la figure 3, l'observateur peut donc voir le guide allumé sur toute la longueur du guide et quelle que soit la position de l'observateur par rapport à l'axe du véhicule.

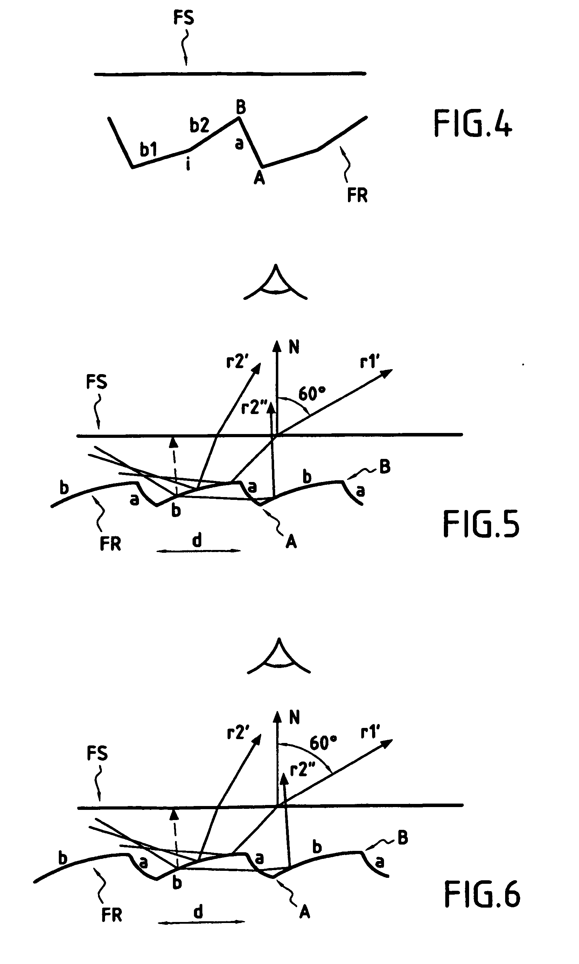

La figure 4 représente une seconde variante de l'invention : les pseudo-prismes ont un sommet externe A et une facette a plane similaires à ceux de l'exemple comparatif selon la figure 2. Par contre, la facette b est décomposée en deux pans b1 et b2 jointifs. En section, on a donc une facette représentée sous forme d'une ligne brisée avec un point d'inflexion i séparant les deux segments de droite.

La figure 5 représente une troisième variante selon l'invention : les pseudo-prismes ont une facette b similaire à celle selon la figure 3, mais la facette a est cette fois également courbe, de façon convexe. Cette variante donne au guide des degrés de liberté supplémentaires (courbure de la face a) pour contrôler l'homogénéité le long du guide, notamment en ajustant la courbure de la face a.

La figure 6 représente une quatrième variante selon l'invention : elle est très proche de la troisième variante. La différence réside dans la zone de jonction ou sommet « interne » B entre deux pseudo-prismes consécutifs : au lieu de présenter un angle, elle est arrondie. Ce sommet interne courbe permet une transition plus douce entre deux pseudo-prismes consécutifs. Il améliore encore l'homogénéité du guide car une quantité plus importante de lumière continue de se propager dans le guide, et parce que la forme courbe de l'arrête autorise l'envoie de rayons au-delà de l'angle de 60° déjà mentionné.

Par ailleurs, il est avantageux de faire évoluer les paramètres dimensionnels des pseudo-prismes le long du guide : comme par exemple le pas (entre 0.5 mm et 2 mm), les angles des sommets internes B et externes A (très variables, pouvant varier par exemple entre 45 et 140°), les courbures des faces a et b (flèches de l'ordre du dixième de millimètre)

Tous les exemples selon l'invention décrits plus haut représentent une face de sortie FS du guide optique lisse. Toujours selon l'invention, elle peut, alternativement, avoir un profil strié, comme par exemple écrit dans la demande de brevet français 04 06 375 déposée le 11 juin 2004. Ces stries permettent de modifier l'orientation, de « redresser » les rayons lumineux en sortie du guide optique, c'est-à-dire de favoriser leur sortie du guide optique avec un angle négatif par rapport à la normale N au guide .

Ces stries peuvent être de différentes formes, par exemple, en forme de prismes ou bien de dômes ou bien une combinaison de prismes et de dômes.

Quand on choisit la variante où la face de sortie est munie de stries, chaque strie de la face de sortie FS est de préférence située en regard d'un pseudo-prisme PR de la face de réflexion FR.

Dans un mode de réalisation, non représenté sur les figures, par mesure de simplification, le dispositif d'éclairage ou de signalisation de l'invention comporte au moins deux sources lumineuses placées chacune à une extrémité du guide optique. Le guide optique peut ainsi propager des rayons lumineux à partir des deux extrémités du guide optique, ce qui permet d'augmenter la longueur du guide optique.

Dans un autre mode de réalisation de l'invention, le dispositif d'éclairage ou de signalisation comporte plusieurs guides optiques placés de façon à avoir au moins une intersection commune. Une source lumineuse est placée à ce point d'intersection de façon à émettre des faisceaux lumineux dans chacun des guides optiques.

## Revendications

1. Dispositif d'éclairage et/ou de signalisation pour véhicule automobile comportant au moins une source lumineuse (S) émettant un faisceau lumineux et au moins un guide optique (G) linéaire dans lequel se propage ledit faisceau lumineux, ledit guide optique comportant
- une première face formant une face de sortie (FS) du faisceau lumineux, et
- une seconde face, opposée à la face de sortie, formant une face de réflexion (FR) du faisceau lumineux,
**caractérisé en ce que**
ladite face de réflexion (FR) est munie d'éléments réfléchissants sous forme de pseudo-prismes
- dont l'une des facettes (a,b) comprend au moins deux pans inclinés successifs ayant des inclinaisons différentes et/ou est au moins partiellement courbe,
- et l'autre facette est plane.

2. Dispositif selon la revendication précédente, **caractérisé en ce que** l'une des facettes qui comprend au moins deux pans inclinés successifs ayant des inclinaisons différentes et/ou est au moins partiellement courbe est la facette active en réflexion des pseudo-prismes.

3. Dispositif d'éclairage et/ou de signalisation pour véhicule automobile comportant au moins une source lumineuse (S) émettant un faisceau lumineux et au moins un guide optique (G) linéaire dans lequel se propage ledit faisceau lumineux, ledit guide optique comportant
- une première face formant une face de sortie (FS) du faisceau lumineux, et
- une seconde face, opposée à la face de sortie, formant une face de réflexion (FR) du faisceau lumineux,
**caractérisé en ce que**
ladite face de réflexion (FR) est munie d'éléments réfléchissants sous forme de pseudo-prismes dont les deux facettes (a,b)
- comprennent au moins deux pans inclinés successifs ayant des inclinaisons différentes et/ou
- sont au moins partiellement courbes, de courbure inversée convexe-concave.

4. Dispositif selon l'une des revendications précédentes, **caractérisé en ce que** les pseudo-prismes de la face de réflexion (FR) sont consécutifs.

5. Dispositif selon la revendication précédente, **caractérisé en ce que** les pseudo-prismes ont une facette (a,b) concave.

6. Dispositif selon l'une des revendications précédentes, **caractérisé en ce que** les pseudo-prismes ont leurs sommets internes et/ou externes (A,B) courbes.

7. Dispositif selon l'une des revendications précédentes, **caractérisé en ce que** la géométrie des pseudo-prismes évolue le long du guide de lumière (G).

8. Dispositif selon la revendication précédente, **caractérisé en ce que** la facette (a,b) du pseudo-prisme comportant plusieurs pans inclinés et/ou la facette (a,b) courbe du pseudo-prisme ont une flèche qui varie le long du guide (G) et/ou ont un angle de départ (x) par rapport au plan passant par la base des pseudo-primes qui varie de long du guide (G) et/ou ont un angle au sommet (y) qui varie le long du guide (G).

9. Dispositif selon l'une des revendications précédentes, **caractérisé en ce que** la face de sortie (FS) du guide (G) est munie de stries ou de prismes, de préférence en regard des pseudo-prismes de la face de réflexion (FR) dudit guide (G).

10. Dispositif selon l'une des revendications précédentes, **caractérisé en ce que** la face (FR) du guide optique sur laquelle se trouvent les pseudo prismes se trouve selon un plan sensiblement parallèle ou peu incliné par rapport à l'axe d'émission de lumière de la source lumineuse alimentant le guide.

11. Véhicule automobile intégrant au moins un dispositif selon l'une des revendications précédentes.

## Patentansprüche

1. Beleuchtungs- und/oder Signalgebungsvorrichtung für Kraftfahrzeuge mit wenigstens einer ein Lichtbündel emittierenden Lichtquelle (S) und wenigstens einem linearen Lichtleiter (G), in dem sich das Lichtbündel ausbreitet, wobei der Lichtleiter umfasst:
- eine erste Fläche, die eine Austrittsfläche (FS) des Lichtbündels bildet, und
- eine der Austrittsfläche gegenüberliegende zweite Fläche, die eine Reflexionsfläche (FR) des Lichtbündels bildet,
**dadurch gekennzeichnet, dass**
die Reflexionsfläche (FR) mit Reflexionselementen in Form von Pseudoprismen versehen ist,
- deren eine Facette (a, b) wenigstens zwei aufeinanderfolgende geneigte Flächen mit unterschiedlichen Neigungen aufweist und/oder wenigstens zum Teil gekrümmt ist,
- und deren andere Facette eben ist.

2. Vorrichtung nach dem vorhergehenden Anspruch,
**dadurch gekennzeichnet, dass** die eine Facette, die wenigstens zwei aufeinanderfolgende geneigte Flächen mit unterschiedlicher Neigung aufweist und/oder zum Teil gekrümmt ist, die an der Reflexion beteiligte Facette der Pseudoprismen ist.

3. Beleuchtungs- und/oder Signalgebungsvorrichtung für Kraftfahrzeuge mit wenigstens einer ein Lichtbündel emittierender Lichtquelle (S) und wenigstens einem linearen Lichtleiter (G), in dem sich das Lichtbündel ausbreitet, wobei der Lichtleiter umfasst:
- eine erste Fläche, die eine Austrittsfläche (FS) des Lichtbündels bildet, und
- eine der Austrittsfläche gegenüberliegende zweite Fläche, die eine Reflexionsfläche (FR) des Lichtbündels bildet,
**dadurch gekennzeichnet, dass**
die Reflexionsfläche (FR) mit Reflexionselementen in Form von Pseudoprismen versehen ist, deren beide Facetten (a, b)
- wenigstens zwei aufeinanderfolgende geneigte Flächen mit unterschiedlichen Neigungen aufweisen und/oder,
- wenigstens zum Teil gekrümmt sind, mit reziproker konvex-konkaver Krümmung.

4. Vorrichtung nach einem der vorhergehenden Ansprüche,
**dadurch gekennzeichnet, dass** die Pseudoprismen der Reflexionsfläche (FR) aufeinanderfolgen.

5. Vorrichtung nach dem vorhergehenden Anspruch,
**dadurch gekennzeichnet, dass** die Pseudoprismen eine konkave Facette (a, b) haben.

6. Vorrichtung nach einem der vorhergehenden Ansprüche,
**dadurch gekennzeichnet, dass** der innere und/oder äußere Scheitelpunkt (A, B) der Pseudoprismen gekrümmt ist.

7. Vorrichtung nach einem der vorhergehenden Ansprüche,
**dadurch gekennzeichnet, dass** die Geometrie der Pseudoprismen sich entlang des Lichtleiters (G) verändert.

8. Vorrichtung nach dem vorhergehenden Anspruch,
**dadurch gekennzeichnet, dass** die Facette (a, b) des Pseudoprismas mit mehreren geneigten Flächen und/oder die gekrümmte Facette (a, b) des Pseudoprismas eine Wölbhöhe haben, die entlang des Lichtleiters (G) variiert, und/oder bezüglich der durch die Basis der Pseudoprismen verlaufenden Ebene einen Abstrahlwinkel (x) haben, der entlang des Lichtleiters (G) variiert, und/oder einen Scheitelwinkel (y) haben, der entlang des Lichtleiters (G) variiert.

9. Vorrichtung nach einem der vorhergehenden Ansprüche,
**dadurch gekennzeichnet, dass** die Austrittsfläche (FS) des Lichtleiters (G) mit Rillen oder Prismen versehen ist, vorzugsweise den Pseudoprismen der Reflexionsfläche (FR) des Lichtleiters (G) gegenüberliegend.

10. Vorrichtung nach einem der vorhergehenden Ansprüche,
**dadurch gekennzeichnet, dass** die Fläche (FR) des Lichtleiters, auf der sich die Pseudoprismen befinden, in einer bezüglich der Emissionsachse der den Lichtleiter speisenden Lichtquelle im Wesentlichen parallelen oder leicht geneigten Ebene liegt.

11. Kraftfahrzeug, das wenigstens eine Vorrichtung nach einem der vorhergehenden Ansprüche umfasst.

## Claims

1. Lighting and/or signalling device for a motor vehicle comprising at least one light source (S) emitting a light beam and at least one linear optical guide (G) in which said light beam propagates, said optical guide comprising
- a first face forming an output face (FS) of the light beam, and
- a second face, opposite the output face, forming a reflection face (FR) of the light beam, **characterized in that** said reflection face (FR) is provided with reflective elements in the form of pseudo-prisms,
- one of the facets (a, b) of which comprises at least two successive sides inclined in different directions and/or is at least partially curved,
- and the other facet is planar.

2. Device according to the above claim, **characterized in that** one of the facets, which comprises at least two successive sides inclined in different directions and/or is at least partially curved, is the reflectively active facet of the pseudo-prisms.

3. Lighting and/or signalling device for a motor vehicle comprising at least one light source (S) emitting a light beam and at least one linear optical guide (G) in which said light beam propagates, said optical guide comprising
- a first face forming an output face (FS) of the light beam, and
- a second face, opposite the output face, forming a reflection face (FR) of the light beam, **characterized in that** said reflection face (FR) is provided with reflective elements in the form of pseudo-prisms, the two facets (a, b) of which
- comprise at least two successive sides inclined in different directions and/or
- are at least partially curved, having alternately convex and concave curvature.

4. Device according to one of the above claims, **characterized in that** the pseudo-prisms of the reflection face (FR) are consecutive.

5. Device according to the above claim, **characterized in that** the pseudo-prisms have a concave facet (a, b).

6. Device according to one of the above claims, **characterized in that** the internal and/or external vertices (A, B) of the pseudo-prisms are curved.

7. Device according to one of the above claims, **characterized in that** the geometry of the pseudo-prisms evolves along the length of the light guide (G).

8. Device according to the above claim, **characterized in that** the facet (a, b) of the pseudo-prism comprising several inclined sides and/or the curved facet (a, b) of the pseudo-prism have an arrow which varies along the length of the guide (G) and/or have a starting angle (x) relative to the plane passing through the base of the pseudo-prisms which varies along the length of the guide (G) and/or have an angle to the vertex (y) which varies along the length of the guide (G).

9. Device according to one of the above claims, **characterized in that** the output face (FS) of the guide (G) is provided with flutes or prisms, preferably opposite the pseudo-prisms of the reflection face (FR) of said guide (G).

10. Device according to one of the above claims, **characterized in that** the face (FR) of the optical guide on which the pseudo prisms are situated according to a plane substantially parallel or slightly inclined in relation to the light emission axis of the light source supplying the guide.

11. Motor vehicle integrating at least one device according to one of the above claims.
